(19) Europäisches Patentamt
European Patent Office
Office européen des brevets

(11) EP 0 747 330 B1

(12) **EUROPÄISCHE PATENTSCHRIFT**

(45) Veröffentlichungstag und Bekanntmachung des Hinweises auf die Patenterteilung:
**07.04.1999 Patentblatt 1999/14**

(51) Int. Cl.$^6$: **C03C 17/36**

(21) Anmeldenummer: **96106895.4**

(22) Anmeldetag: **02.05.1996**

(54) **Scheibe aus durchscheinendem Werkstoff sowie Verfahren zu ihrer Herstellung**

Sheet from transparent material and method for its manufacture

Plaque en matériau transparent et méthode de sa production

(84) Benannte Vertragsstaaten:
**BE CH DE ES FR GB IT LI LU NL SE**

(30) Priorität: **08.06.1995 DE 19520843**

(43) Veröffentlichungstag der Anmeldung:
**11.12.1996 Patentblatt 1996/50**

(73) Patentinhaber:
**Balzers und Leybold Deutschland Holding Aktiengesellschaft**
**63450 Hanau (DE)**

(72) Erfinder:
- **Zmelty, Anton**
**63768 Hösbach (DE)**
- **Szczyrbowski, Joachim, Dr.**
**63773 Goldbach (DE)**
- **Braatz, Christoph**
**63512 Hainstadt (DE)**

(56) Entgegenhaltungen:
**EP-A- 0 543 077**
**DE-A- 3 543 178**
**DE-A- 4 211 363**
**FR-A- 2 641 271**
**GB-A- 2 186 001**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.7/3.6

## Beschreibung

Die Erfindung betrifft eine Scheibe aus durchscheinendem Werkstoff mit hohem Transmissionsverhalten im sichtbaren Bereich und mit sehr hohem Reflexionsverhalten im Wärmestrahlungsbereich sowie das Verfahren zu ihrer Herstellung.

Bekannt ist bereits ein Substrat aus Verglasungsmaterial mit einem Mehrschichtüberzug, der eine reflektierende Schicht aus Silber, eingeschlossen zwischen einer transparenten Unterschicht und einem transparenten Überzug aufweist (FR 2 641 271), wobei die Unterschicht für die Silberschicht wenigstens eine Schicht aus einem Metalloxid der Gruppe Zinnoxid, Titanoxid, Aluminiumoxid, Wismutoxid und ein Gemisch von zwei oder mehr davon aufweist, worüber eine Schicht von Zinkoxid mit einer Dicke von nicht mehr als 15 nm abgeschieden ist und der Überzug für die Silberschicht eine Schicht eines Oxids eines Opfermetalls aus der Gruppe Titan, Aluminium, rostfreier Stahl, Wismut, Zinn und Gemischen von zwei oder mehr davon aufweist, die durch anfängliche Abscheidung des Opfermetalls und seine Überführung ins Oxid gebildet ist.

Bekannt ist weiterhin ein Verfahren zur Herstellung eines gebogenen und/oder getemperten, mit Silber beschichteten Glassubstrats (GB 2,186,001), bestehend aus einer Glasscheibe mit einer Silberschicht mit einer Dicke von 5 nm bis 30 nm, einer auf die Silberschicht aufgebrachten Aluminium-, Titan-, Zink- oder Tantalschicht und einer Antireflexschicht aus einem Metalloxid eines weiteren Metalls und mit einem Biege- und/oder Tempervorgang, in dem das Substrat auf eine Temperatur oberhalb des Erweichungspunktes erhitzt wird, wobei das beschichtete Glas eine verminderte Lichtdurchlässigkeit entwickelt.

Darüber hinaus ist ein Verfahren zum Herstellen von Scheiben mit hohem Transmissionsverhalten im sichtbaren Spektralbereich und mit hohem Reflexionsverhalten für Wärmestrahlung durch Beschichtung von aus Mineralglas bestehenden Substraten bekannt (DE 35 43 178) mit einer ersten Schicht aus einem Oxid der Gruppe Zinnoxid, Siliziumoxid, Aluminiumoxid, Tantaloxid und Zirkonoxid oder deren Mischoxide, mit einer zweiten Schicht aus einem Metall aus der Gruppe Tantal, Wolfram, Nickel und Eisen oder Legierungen mit mindestens 50 Gew% Anteil eines dieser Metalle, mit einer dritten Schicht aus Silber oder einer Silberlegierung mit mindestens 50 Gew% Silberanteil, mit einer vierten Schicht aus einem Metall aus der die zweite Schicht bildenden Gruppe und mit einer fünften Schicht aus einem Oxid aus der die erste Gruppe bildenden Oxide, wobei das Substrat mit dem gesamten Schichtpaket auf mindestens die Erweichungstemperatur des Glases erwärmt, in erwärmtem Zustand plastisch verformt und in verformtem Zustand abgekühlt wird.

Bekannt ist auch ein Verfahren zum Herstellen von Scheiben mit hohem Transmissionsverhalten im sichtbaren Spektralbereich und mit hohem Reflexionsverhalten für Wärmestrahlung durch Beschichtung von transparenten Substraten mit Hilfe von Kathodenzerstäubung (DE 42 11 363), bei dem eine erste Schicht aus ZnO mit einer Dicke von etwa 40 nm, eine zweite Schicht aus Ag mit einer Dicke von etwa 9 nm, eine dritte Schicht, die als metallische oder suboxidische (unterstöchiometrische) Schicht aus einem der Metalle Ti oder NiCr mit einer Dicke von etwa 1,5 nm, eine vierte Schicht aus ZnO mit einer Dicke von etwa 32 nm und eine fünfte Schicht aus $TiO_2$ mit einer Dicke von etwa 7 nm gebildet wird.

Schließlich ist ein Verfahren zum Herstellen von Scheiben mit hohem Transmissionsverhalten im sichtbaren Spektralbereich und mit hohem Reflexionsverhalten für Wärmestrahlung durch Beschichtung von transparenten Substraten mit Hilfe von Kathodenzerstäubung bekannt (EP 0 543 077), bei dem eine erste Schicht aus einem Material der Oxidgruppe ZnO, $SnO_2$, $In_2O_3$, $TiO_2$, $ZrO_2$, $Ta_2O_5$, $SiO_2$, $Al_2O_3$ oder deren Mischungen oder aus einem der Nitride AlN, $Si_3N_4$ oder deren Mischungen oder aus Aluminium-, Titan-, Zirkon- oder Siliziumoxinitrid oder deren Mischungen mit einer Dicke von 20 nm bis 60 nm, eine zweite Schicht aus einem der Metalle Ag, Cu oder deren Mischungen mit einer Dicke von 5 bis 30 nm, eine dritte Schicht aus einem der Metalle Pd oder Pt oder deren Mischungen mit der Dicke von 0,2 nm bis 5 nm, vorzugsweise 0,5 nm, eine vierte Schicht, die als metallische oder suboxidische (unterstöchiometrische) Schicht aus einem der Metalle Ti, Cr oder deren Mischung oder einer Legierung mit mindestens 15 % von einem der Metalle mit der Dicke von 0,5 nm bis 5 nm, vorzugsweise 1,5 nm, und eine fünfte Schicht aus einem Material, das der ersten Schicht entspricht, aufgebracht wird.

Diese bekannten Scheiben haben sämtlich den Nachteil, daß entweder ihre Wärmereflexionseigenschaften oder aber ihre Unempfindlichkeit gegenüber aggressiven Substanzen in der Umwelt verbesserungswürdig ist.

Insbesondere sollten Scheiben dieser Art eine hohe chemische Beständigkeit gegenüber NaCl- und $SO_2$-Wasserlösungen in bestimmten Konzentrationen aufweisen.

Fenster mit derartigen Scheiben sollen im Winter verhindern, daß Wärme aus einem Raum nach außen hin abgestrahlt wird. Bekannte Schichtsysteme dieser Art werden als "Low-e" (englisch: low emissivity) bezeichnet.

Ein herkömmliches Low-e besteht aus verschiedenen Kategorien von Schichten, die verschiedene Eigenschaften und auch verschiedene Aufgaben in diesem System zu erfüllen haben:

a) Eine elektrisch hochleitende Schicht, oft ein Metall wie Ag, Au oder Cu, mit sehr niedrigem Strahlungsemissionskoeffizienten, stellt die eigentliche Low-e (Low-emissivity) Beschichtung.

b) Da aber eine Metallschicht eine hohe Lichtreflexion (d. h. eine niedrige Lichttransmission) im sichtbaren Bereich aufweist, wird diese mit Hilfe von zusätzlichen transparenten Schichten entspiegelt. Eine weitere Aufgabe der transparenten Schichten ist, einen erwünschten Farbton und eine hohe mechanische und chemische Beständigkeit des Systems zu gewährleisten.

c) Um die dünne Metallschicht sowohl während des Herstellungsprozesses als auch nach der Herstellung gegen aggressive Umgebungsatmosphäre zu schützen und eine gute Haftfestigkeit der nächstliegenden Oxidschicht zu gewährleisten, wird auf diese Metallschicht (Ag, Au, Cu) oft eine sogenannte Blockerschicht (Barriereschicht, Haftvermittlerschicht) aus Metall oder Suboxid aufgebracht.

Um alle diese Aufgaben zu erfüllen, ist eine herkömmliche Low-e Beschichtung folgendermaßen aufgebaut:

Substrat | Oxid | Ag | Blocker | Oxid

wobei das Substrat eine transparente anorganische oder organische Glasplatte oder eine transparente organische Folie ist, Ag eine elektrisch leitende Schicht und die Oxide die Antireflexbeschichtung und der Blokker eine Schutzschicht für Ag und den Haftvermittler zur Oxidschicht bilden.

Die Lichttransmission einer herkömmlichen Low-e Beschichtung auf einem 4 mm Glas-Substrat beträgt etwa 80 bis 86 %. Die Wärmetransmission durch solche Scheibe hängt von der Emissivität $\varepsilon$ der Low-e Beschichtung ab und kann hier mit einer einfachen Formel beschrieben werden:

$$\varepsilon \cong 0{,}0141 * R_{\blacksquare},$$

wobei

$$R_{\blacksquare} = \frac{\rho}{d}$$

ist und

- $R_{\blacksquare}$ der Flächenwiderstand der Silberschicht,
- $d$ die Schichtdicke,
- $\rho$ der spezifischer Widerstand.

Die vorstehende Formel beschreibt die Emissivität einer dünnen Metallschicht ausreichend genau, solange der Wert kleiner als 0,2 ist. Für die bekannten Low-e Beschichtungen beträgt $\varepsilon$ etwa 0,1.

Je kleiner die Emissivität, desto kleiner sind die Strahlungsverluste durch eine Beschichtung. Die Emissivität kann entweder durch Erniedrigung des spezifischen Widerstandes oder durch Erhöhung der Schichtdicke unterdrückt werden. Mit der Erhöhung der Schichtdicke steigt die Lichtabsorbtion, was zu einer unerwünschten Verminderung der Lichttransmission führt, wobei eine Verminderung des spezifischen Widerstandes der Ag-Schicht nicht nur zu einer Verminderung der Emissivität sondern auch zu einer Erhöhung der Lichttransmission führt.

Der spezifische Widerstand einer dünnen Schicht kann folgendermaßen beschrieben werden:

$$\rho = \rho_K + \rho_F + \rho_G$$

wobei

- $\rho_K$ der spezifische Widerstand in einer unendlich dicken, monokristallinen Schicht
- $\rho_F$ ein Teil des spezifischen Widerstandes, der durch Elektronenstreuung an den Schichtflächen verursacht ist,
- $\rho_G$ ein Teil des spezifischen Widerstandes, der durch Elektronenstreuung an den Korngrenzen der einzelnen Kristalliten verursacht ist.

Der spezifische Widerstand $\rho_K$ einer sehr dicken, monokristallinen Ag-Schicht hängt von der Reinheit des Metalls ab. Schon eine kleine Menge von Fremdmaterial kann den Schichtwiderstand beträchtlich erhöhen. Dies bedeutet, daß der Sputterprozeß in so einer Gasatmosphäre geführt sein soll, daß keine Atome sich in die Silberschicht einbauen.

Der spezifische Widerstand $\rho_F$ einer dünnen Schicht hängt von der Rauhigkeit der Schichtflächen ab. Es ist wichtig, daß die untere Oxidschicht, auf der das Silber wächst, sehr glatt wird. Damit kann man diesen Teil der Elektronenstreuung weitgehend reduzieren.

Der spezifische Widerstand $\rho_G$ hängt von der Kristallitgröße und der Art der Korngrenzen zwischen den einzelnen Kristalliten ab. Je kleiner die Kristalliten und je breiter und dichter die Korngrenzen, desto großer ist die Elektronenstreuung. Die Größe der Silberkristalliten kann man durch geeignete Präparierung der Substratoberfläche beeinflussen. Das unter dem Silber liegende Oxid soll daß Ag-Wachstum fördern, was zu großen Kristalliten führen wird. Weiterhin, die Oxidelemente dürfen in die Silberschicht nicht diffundieren. Die Fremdatomen diffundieren in eine Schicht hauptsächlich durch Korngrenzen, was zu deren Verdichtung und damit zu einer verstärkten Elektronenstreuung führt.

Die Aufgabe der vorliegenden Erfindung ist es, die Leitfähigkeit der Silberschicht in einer Low-e Beschichtung zu erhöhen, um damit eine bessere Wärmeisolation eines Isolierglases zu erzielen. Diese Verbesserung soll ohne Verluste in der Lichttransmission, der mechanischen und der chemischen Beständigkeit der gesamten Beschichtung ermöglicht werden.

Diese Aufgabe wird erfindungsgemäß dadurch gelöst, daß unter der Silberschicht eine zusätzliche dünne Schicht eingebaut ist, die eine sehr glatte Oberfläche gewährleistet und deren Atome nur sehr wenig oder gar nicht in das Silber diffundieren. Das Material der zusätzlichen Schicht ist dazu so ausgewählt, daß das Silberwachstum begünstigt wird. Auf diese Weise wird die Leitfähigkeit der Ag-Schicht bis zu 30 % erhöht. Als geeignete Schichtmaterialien finden unterstöchiometrische Oxide der Metalle Zn, Ta und deren Mischungen Verwendung.

Ein Schichtsystem nach der Erfindung ist wie folgt aufgebaut:

| | | | | | | |
|---|---|---|---|---|---|---|
| Substrat | Oxid | $TaO_x$ | Ag | Blocker | Oxid | (1) |
| Substrat | Oxid | $TaO_x$ | Ag | Blocker | Oxid | (2) |
| Substrat | Oxid | $ZnTaO_x$ | Ag | Blocker | Oxid | (3) |

| | | | | | | | | | |
|---|---|---|---|---|---|---|---|---|---|
| Sub-strat | Oxid | $ZnO_x$ | Ag | Blok-ker | Oxid | $ZnO_x$ | Ag | Blok-ker | Oxid |

(4)

Die einzelnen Dicken in den Beispielen 1 bis 3 betragen: erste Oxidschicht ca. 40 nm, die zweite Schicht etwa 4 nm, die Ag-Schicht ca. 6 nm, die Blockerschicht ca. 1.5 nm, und die letzte Oxidschicht ca. 38 nm.

Das System (4) beinhaltet zwei Ag-Schichten. Mit der zweiten Ag-Schicht wird die elektrische Leitfähigkeit des Schichtpakets etwa zweimal erhöht.

Überraschenderweise hat sich gezeigt, daß eine solche dünne unterstöchiometrische $ZnO_x$-, $TaO_x$- oder $ZnTaO_x$-Schicht die Ag-Leitfähigkeit wesentlich erhöhen kann und zusätzlich einen sehr guten Haftvermittler zwischen Ag und der Oxidschicht darstellt. Die mechanische und die chemische Beständigkeit des Systems ist dabei durch den Blocker auf der Silberschicht gewährleistet.

Scheiben nach der Erfindung lassen sich in besonders vorteilhafter Weise dadurch herstellen, daß die Schichten im Vakuum mit Hilfe der Magnetron-Kathodenzerstäubung aufgebracht werden. Das Verfahren ermöglicht bei Einsatz von Durchlaufanlagen besonders wirtschaftlich die Beschichtung großer Glasscheiben. Die metallischen Schichten werden durch Zerstaubung in einer sauerstofffreien Atmosphäre aufgebracht Die Herstellung der Oxidschichten und der erfindungsgemäß unterstöchiometrischen Zn-, Ta- oder deren Legierungsoxiden läßt sich mit Vorteil durch reaktive Magnetron-Kathodenzerstäubung von metallischen oder Legierungstargets in einer sauerstoffhaltigen Atmosphäre durchführen.

Einzelheiten und Merkmale ergeben sich aus den Patentansprüchen.

Scheiben nach der Erfindung lassen sich nach den nachstehend beschriebenen Ausführungsbeispielen herstellen.

Die funktionalen Abhängigkeiten zwischen den die Ausführungsbeispiele charakterisierenden Kenngrößen Flächenwiderstand und Summe der Transmission und Reflexion als Funktion der auf den Scheiben aufgebrachten

Schichtdicken ist in den Zeichnungen 1 - 3 wiedergegeben. Es zeigen:

Figur 1 den gemessenen Flächenwiderstand in Abhängigkeit der Ag-Schichtdicke mit und ohne Zinkoxidschicht,

Figur 2 den Flächenwiderstand als Funktion der Zinkoxidschichtdicke, und

Figur 3 die Summe aus Transmission und Reflexion einer Low-e Beschichtung als Funktion der Ag-Schichtdicke, jeweils mit und ohne Zinkoxidschicht.

In einer Sputteranlage gemäß dem Beispiel I (Tabelle I) wurden auf eine Floatglasscheibe von 2 mm Dicke im Format 50 x 50 mm nacheinander folgende Schichten aufgebracht:

- Eine $BiAlO_x$-Schicht durch reaktive Zerstäubung eines BiAl-Targets mit 4 at.% Al in Argon-Sauerstoff-Atmosphäre bei einem Druck von $3*10^{-3}$ mbar in einer Dicke ca. 22 nm,
- eine Ag-Schicht der Dicke 12 nm durch Zerstäubung eines Ag-Targets in Argon-Atmosphäre bei einem Druck von $3*10^{-3}$ mbar,
- eine unterstöchiometrische $TiO_x$-Schicht der Dicke 2 nm durch Zerstäubung eines Ti-Targets in Argon-Sauerstoff-Atmosphäre bei einem Druck von $3*10^{-3}$ mbar,
- eine $SnMgO_2$-Schicht durch reaktive Zerstäubung eines SnMg-Targets mit 10 at.% Mg in Argon-Sauerstoff-Atmosphäre bei einem Druck von $3*10^{-3}$ mbar in einer Dicke von ca. 38 nm.

Bei den Beispielen nach 2 bis 6 (Tabelle I) wurde nur jeweils die Dicke der zweiten Schicht - $ZnO_x$ - geändert.
Die genauen Werte der einzelnen Schichtdicken und die gemessene Lichttransmission, Reflexion und der Flächenwiderstand der hergestellten Schichtsystemen sind in der Tabelle 1 zu finden. Auf dem Bild 1 ist der gemessene Flächenwiderstand der hergestellten Schichtsysteme als Funktion der Dicke der $ZnO_x$ dargestellt. Man sieht, daß mit steigender $ZnO_x$ - Dicke bis zu ca. 4 nm der Widerstand der Ag-Schicht fällt und dann konstant bleibt. Die gemessene prozentuale Erhöhung der Ag-Leitfähigkeit ist größer als 30 %.
In der Tabelle II sind drei Paaren vom Low-e Beschichtungen gezeigt. Proben, die zu einem Paar gehören, unterscheiden sich nur dadurch, daß eine eine $ZnO_x$-Schicht beinhaltet und die andere ohne eine solche Schicht ist. Man sieht, daß die dünne $ZnO_x$-Schicht nicht nur die elektrische Leitfähigkeit erhöht, sondern auch die optischen Eigenschaften verbessert. Es ist besonders deutlich bei der Summe Ty + Ry. Dieser Wert ist immer für diese Probe höher, die die $ZnO_x$-Schicht beinhaltet. Der Unterschied steigt mit wachsender Leitfähigkeit der Ag-Schicht. Die Transmissions- und Reflexionswerte lassen sich nicht eindeutig untereinander vergleichen, weil die einzelnen Schichtsysteme nicht auf die optischen Eigenschaften optimiert wurden. In diesem Falle ist für die Auswertung nur die Summe Ty + Ry relevant.

Tabelle I

| Nr | BiAl-Oxid (nm) | $ZnO_x$ (nm) | Ag (nm) | $TiO_x$ (nm) | SnMg-Oxid (nm) | R (Ω) | Ty (%) | Ry (%) | Ty+Ry (%) |
|---|---|---|---|---|---|---|---|---|---|
| 1 | 22 | - | 12 | 2 | 38 | 6,0 | 82,2 | 7,1 | 89,3 |
| 2 | 22 | 1 | 12 | 2 | 38 | 5,0 | 82,8 | 6,3 | 89,1 |
| 3 | 22 | 2 | 12 | 2 | 38 | 4,5 | 83,8 | 6,2 | 90,0 |
| 4 | 22 | 3 | 12 | 2 | 38 | 4,0 | 83,8 | 6,2 | 90,0 |
| 5 | 22 | 4 | 12 | 2 | 38 | 3,9 | 84,8 | 6,5 | 91,3 |
| 6 | 22 | 5 | 12 | 2 | 38 | 3,9 | 85,3 | 5,6 | 91,0 |
| 7 | 22 | 6 | 12 | 2 | 38 | 3,8 | 85,0 | 5,6 | 91,0 |

Tabelle II

| Nr | BiAl-Oxid (nm) | $ZnO_x$ (nm) | Ag (nm) | $TiO_x$ (nm) | SnMg-Oxid (nm) | R (Ω) | Ty (%) | Ry (%) | Ty+Ry (%) |
|---|---|---|---|---|---|---|---|---|---|
| 1 | 22 | - | 12 | 2 | 38 | 6,0 | 82,2 | 7,1 | 89,3 |
| 7 | 22 | 6 | 12 | 2 | 38 | **3,8** | 85,0 | 5,6 | **91,0** |
| 8 | 22 | - | 13 | 2 | 38 | 5,4 | 82,7 | 5,4 | 88,1 |
| 9 | 22 | 6 | 13 | 2 | 38 | **3,5** | 83,5 | 6,1 | **89,7** |
| 10 | 22 | - | 14 | 2 | 38 | 4,5 | 82,3 | 4,3 | 86,6 |
| 11 | 22 | 6 | 14 | 2 | 38 | **3,2** | 83,0 | 6,5 | **89,5** |

In der Tabelle III ist Low-e System gezeigt, wo für die beiden Entspiegelungsschichten das SnMg-Oxid benutzt wurde. Auch in diesem Falle hat die Schicht mit $ZnO_x$ deutlich höhere Leitfähigkeit und höhere Summe Ty + Ry.

Tabelle III

| Nr | BiAl-Oxid (nm) | $ZnO_x$ (nm) | Ag (nm) | $TiO_x$ (nm) | SnMg-Oxid (nm) | R (Ω) | Ty (%) | Ry (%) | Ty+Ry (%) |
|---|---|---|---|---|---|---|---|---|---|
| 12 | 40 | - | 90 | 2 | 42 | 8,0 | 83,6 | 3,7 | 87,3 |
| 14 | 40 | 6 | 90 | 2 | 42 | **6,4** | 84,5 | 4,5 | **89,0** |

## Patentansprüche

1. Scheibe aus durchscheinenden Werkstoff mit einem Substrat und einem auf einer Seite des Substrates ausgebildeten Schichtsystem, **dadurch gekennzeichnet**, daß auf dem Substrat

   a)eine **erste Schicht** aus der Oxidgruppe ZnO, $SnO_2$, $In_2O_3$, $Bi_2O_3$, $TiO_2$, $ZrO_2$, $Ta_2O_5$, $SiO_2$, $Al_3O_3$ oder deren Mischungen oder aus einem der Nitride AlN, $Si_3N_4$ oder deren Mischungen oder aus Aluminium-, Titan-, Zirkon- oder Siliziumoxinitrid oder deren Mischungen mit einer Dicke von 20 nm bis 70 nm abgeschieden ist,

   b)eine **zweite Schicht**, die als Metallsuboxid (unterstöchiometrisches Oxid) aus einem der Metalle Zn und/oder Ta oder deren Mischungen mit einer Dicke von 1 nm bis 40 nm abgeschieden ist,

   c)eine **dritte Schicht** aus einem der Metalle Ag, Cu oder deren Mischungen mit einer Dicke von 5 bis 30 nm, aufgebracht ist,

   d)eine **vierte Schicht**, die als Metallschicht oder Metallsuboxid (unterstöchiometrisches Oxid) aus einem der Metalle Ti, Cr, Nb oder deren Mischung oder einer Legierung mit mindestens 15 at. % von einem der Metalle mit der Dicke von 0.5 bis 5 nm, vorzugsweise 2 nm, aufgebracht ist,

   e)eine **fünfte Schicht**, aus einem Material wie in der ersten Schicht, abgeschieden ist.

2. Scheibe aus durchscheinendem Werkstoff mit einem Substrat und einem auf einer Seite des Substrates ausgebildeten Schichtsystem, **dadurch gekennzeichnet**, daß auf dem Substrat

   a)die **erste Schicht** aus $SnO_2$, $In_2O_3$, $TiO_2$ oder $Bi_2O_3$ bzw. deren Mischoxide mit Gehalt an Mg-, oder Al-, oder P-, oder Ti-, oder Y-, oder Zr-, oder Ta-Oxid von 0 to 20 at.% oder eines der Oxide der Elemente mit der Ordnungszahl 57 bis 71 der Periodentabellen aus einem Bereich von 0 bis 5 at. % abgeschieden ist,

   b) eine **zweite Schicht**, die als Metallsuboxid (unterstöchiometrisches Oxid) aus einem der Metalle Zn und/oder Ta oder deren Mischungen mit einer Dicke von 1 nm bis 40 nm abgeschieden ist,

c) eine **dritte Schicht** aus einem der Metalle Ag, Cu oder deren Mischungen mit einer Dicke von 5 bis 30 nm aufgebracht ist,

d) eine **vierte Schicht**, die als Metallschicht oder Metallsuboxid (unterstöchiometrisches Oxid) aus einem der Metalle Ti, Cr, Nb oder deren Mischung oder einer Legierung mit mindestens 15 at. % von einem der Metalle mit der Dicke von 0.5 bis 5 nm, vorzugsweise 2 nm, aufgebracht ist,

e) eine **fünfte Schicht** aus einem Material wie in der ersten Schicht oder aus der Oxidgruppe ZnO, $SnO_2$, $In_2O_3$, $Bi_2O_3$, $TiO_2$, $ZrO_2$, $Ta_2O_5$, $SiO_2$, $Al_3O_3$ oder deren Mischungen oder aus einem der Nitride AlN, $Si_3N_4$ oder deren Mischungen oder aus Aluminium-, Titan-, Zirkon- oder Siliziumoxinitrid oder deren Mischungen mit einer Dicke von 20 nm bis 70 nm abgeschieden ist.

**3.** Scheibe nach Anspruch 1, **dadurch gekennzeichnet**, daß die zweite Schicht eine Dicke von etwa 5 nm aufweist

**4.** Scheibe nach Anspruch 1, **dadurch gekennzeichnet**, daß zwischen der dritten und der vierten Schicht eine zusätzliche Schicht aus den Materialien wie die Schicht zwei im Anspruch 1, aufgebracht ist

**5.** Scheibe nach einem oder mehreren der vorhergehenden Ansprüche, **dadurch gekennzeichnet**, daß mehrere Schichtpakete nebeneinander auf der einen Scheibenfläche ausgebildet sind.

**6.** Scheibe nach Anspruch 1, **dadurch gekennzeichnet**, daß als Substrat eine transparente anorganische Glasplatte benutzt wird.

**7.** Scheibe nach Anspruch 1, **dadurch gekennzeichnet**, daß als Substrat eine transparente organische Glasplatte benutzt wird.

**8.** Scheibe nach Anspruch 1, **dadurch gekennzeichnet**, daß als Substrat eine transparente organische Folie benutzt wird

**9.** Scheibe nach Anspruch 1, **dadurch gekennzeichnet**, daß die erste Schicht oder die fünfte Schicht oder die erste und die fünfte Schicht als Doppelschicht aus zwei unterschiedlichen Materialien wie die erste Schicht in Anspruch 1, mit einer Gesamtdicke von 20 nm bis 70 nm, abgeschieden ist.

**10.** Scheibe nach Anspruch 1, **dadurch gekennzeichnet**, daß zwischen der ersten und zweiten Schicht eine zusätzliche Schicht aus den Materialien wie die Schicht 4 in Anspruch 1, aufgebracht ist.

**11.** Verfahren zum Herstellen von Scheiben mit hohem Transmissionsverhalten im sichtbaren Spektralbereich und mit hohem Reflexionsverhalten für Wärmestrahlung durch Beschichtung von transparenten Substraten durch Kathodenzerstäubung, **dadurch gekennzeichnet**, daß

a)die **erste Schicht** aus einem Material der Oxidgruppe ZnO, $SnO_2$, $In_2O_3$, $Bi_2O_3$, $TiO_2$, $ZrO_2$, $T_a2_{O5}$, $SiO_2$, $Al_3O_3$ oder deren Mischungen oder aus einem der Nitride AlN, $Si_3N_4$ oder deren Mischungen oder aus Aluminium-, Titan-, Zirkon- oder Siliziumoxinitrid oder deren Mischungen mit einer Dicke von 20 nm bis 70 nm, aufgebracht ist,

b)die **zweite Schicht**, die als Metallsuboxid (unterstöchiometrisches Oxid) aus einem der Metalle Zn und/oder Ta oder deren Mischungen mit einer Dicke von 1 nm bis 40 nm abgeschieden ist,

c)die **dritte Schicht** aus einem der Metalle Ag, Cu oder deren Mischungen mit einer Dicke von 5 bis 30 nm hergestellt ist,

d)die **vierte Schicht**, die als Metallschicht oder Metallsuboxid (unterstöchiometrisches Oxid) aus einem der Metalle Ti, Cr, Nb oder deren Mischung oder einer Legierung mit mindestens 15 at. % von einem der Metalle mit der Dicke von 0.5 bis 5 nm, vorzugsweise 2 nm, hergestellt ist,

e)die **fünfte Schicht** aus einem Material wie in der ersten Schicht aufgebracht ist.

**12.** Verfahren nach Anspruch 11, **dadurch gekennzeichnet**, daß die Oxidschichten in reaktiver Atmosphäre aus Neutralgas, vorzugsweise Argon (Ar), und Sauerstoff ($O_2$) aufgebracht sind, daß die Nitridschichten in reaktiver Atmosphäre aus Neutralgas, vorzugsweise Argon (Ar), und Stickstoff ($N_2$) aufgebracht sind, daß die Oxinitridschichten in reaktiver Atmosphäre aus Neutralgas mit Argon (Ar), Sauerstoff ($O_2$) und Stickstoff ($N_2$) aufgebracht sind, daß die Metallschichten in einer neutralen Atmosphäre, vorzugsweise Argon, aufgebracht sind.

**13.** Verfahren zum Herstellen von Scheiben mit hohem Transmissionsverhalten im sichtbaren Spektralbereich und mit hohem Reflexionsverhalten für Wärmestrahlung durch Beschichtung von transparenten Substraten durch Kathodenzerstäubung, **dadurch gekennzeichnet**, daß

a) die **erste Schicht** aus einem Material der Oxidgruppe $SnO_2$, $Bi_2O_3$ und $In_2O_3$ bzw. deren Mischoxide mit Gehalt an Mg- oder Al- oder P- oder Ti- oder Y- oder Zr- oder Ta - Oxid von 0 - 20 at% oder eines der Oxide der Elemente mit der Ordnungszahl 57 bis 71 der Periodentabelle aus einem Bereich von 0 bis 5at% hergestellt werden,

b)die **zweite Schicht**, die als Metallsuboxid (unterstöchiometrisches Oxid) aus einem der Metalle Zn und/oder Ta oder deren Mischungen mit einer Dicke von 1 nm bis 40 nm abgeschieden ist,

c)die **dritte Schicht** aus einem der Metalle Ag, Cu oder deren Mischungen mit einer Dicke von 5 bis 30 nm hergestellt ist,

d)die **vierte Schicht**, die als Metallschicht oder Metallsuboxid (unterstöchiometrisches Oxid) aus einem der Metalle Ti, Cr, Nb oder deren Mischung oder einer Legierung mit mindestens 15 at. % von einem der Metalle mit der Dicke von 0.5 bis 5 nm, vorzugsweise 2 nm, hergestellt ist,

e)die **fünfte Schicht** aus einem Material wie in der ersten Schicht aufgebracht ist.

**14.** Verfahren nach Anspruch 13, **dadurch gekennzeichnet**, daß die Schichten vom Metalltarget gesputtert werden

**15.** Verfahren nach Anspruch 13, **dadurch gekennzeichnet**, daß die Oxidschichten aus der Gruppe $SnO_2$, $Bi_2O_3$, und $In_2O_3$ oder deren Mischoxide aus einem Target aus Metall oder Metallegierung der Basiselemente gesputtert werden.

**16.** Verfahren nach Anspruch 13, **dadurch gekennzeichnet**, daß die erste Schicht oder die fünfte Schicht oder die erste und die fünfte Schicht als Doppelschicht aus zwei unterschiedlichen Materialien wie die erste Schicht in Anspruch 1, mit einer Gesamtdicke von 20 nm bis 70 nm, abgeschieden ist.

**17.** Verfahren nach Anspruch 13, **dadurch gekennzeichnet**, daß zwischen der ersten und der zweiten Schicht eine zusätzliche Schicht aus den Materialien wie die Schicht 4 in Anspruch 1, aufgebracht ist.

## Claims

**1.** Sheet of transparent material with a substrate and a layer system formed on one side of the substrate, characterised in that

a) a first layer from the oxide group ZnO, $SnO_2$, $In_2O_3$, $Bi_2O_3$, $TiO_2$, $ZrO_2$, $Ta_2O_5$, $SiO_2$, $Al_3O_3$ or their mixtures or from one of the nitrides AlN, $Si_3N_4$ or their mixtures or from aluminium, titanium, zirconium or silicon oxinitride or their mixtures with a thickness of 20 nm to 70 nm is deposited,

b) a second layer which is present as a metal suboxide (sub-stoichiometric oxide) from one of the metals Zn and/or Ta or their mixtures with a thickness of 1 nm to 40 nm is deposited,

c) a third layer from one of the metals Ag, Cu or their mixtures with a thickness of 5 to 30 nm is applied,

d) a fourth layer which is present as a metal layer or metal suboxide (substoichiometric oxide) from one of the metals Ti, Cr, Nb or their mixture or an alloy with at least 15 at.% of one of the metals with the thickness of 0.5 to 5 nm, preferably 2 nm, is applied,

e) a fifth layer, of a material as in the first layer, is deposited.

2. Sheet of transparent material with a substrate and a layer system formed on one side of the substrate, <u>characterised in that</u> on the substrate

a) the <u>first layer</u> of $SnO_2$, $In_2O_3$, $TiO_2$ or $Bi_2O_3$ or their mixed oxides with a content of Mg or Al or P or Ti or Y or Zr or Ta oxide of 0 to 20 at.% or of one of the oxides of the elements with the atomic number 57 to 71 of the Periodic Table from a range of 0 to 5 at.% is deposited,

b) a <u>second layer</u>, which is present as a metal suboxide (sub-stoichiometric oxide) from one of the metals Zn and/or Ta or their mixtures with a thickness of 1 nm to 40 nm is deposited,

c) a <u>third layer</u> from one of the metals Ag, Cu or their mixtures with a thickness of 5 to 30 nm is applied,

d) a <u>fourth layer</u> which is present as a metal layer or metal suboxide (substoichiometric oxide) from one of the metals Ti, Cr, Nb or their mixture or an alloy with at least 15 at.% of one of the metals with the thickness of 0.5 to 5 nm, preferably 2 nm, is applied,

e) a <u>fifth layer</u>, of a material as in the first layer or from the oxide group ZnO, $SnO_2$, $In_2O_3$, $Bi_2O_3$, $TiO_2$, $ZrO_2$, $Ta_2O_5$, $SiO_2$, $Al_3O_3$ or their mixtures or from one of the nitrides AlN, $Si_3N_4$ or their mixtures or from aluminium, titanium, zirconium or silicon oxinitride or their mixtures with a thickness of 20 nm to 70 nm, is deposited.

3. Sheet according to claim 1, <u>characterised in that</u> the second layer has a thickness of about 5 nm.

4. Sheet according to claim 1, <u>characterised in that</u> between the third and the fourth layers an additional layer of the same materials as layer two in claim 1 is applied.

5. Sheet according to one or more of the preceding claims, <u>characterised in that</u> several layer packets are formed next to one another on the one sheet surface.

6. Sheet according to claim 1, <u>characterised in that</u> a transparent inorganic glass plate is used as substrate.

7. Sheet according to claim 1, <u>characterised in that</u> a transparent organic glass plate is used as substrate.

8. Sheet according to claim 1, <u>characterised in that</u> a transparent organic sheet is used as substrate.

9. Sheet according to claim 1, <u>characterised in that</u> the first sheet or the fifth sheet or the first and the fifth sheet is deposited as a double layer of two different materials like the first layer in claim 1, with a total thickness of 20 nm to 70 nm.

10. Sheet according to claim 1, <u>characterised in that</u>, between the first and second layers, an additional layer of the same materials as layer 4 in claim 1 is applied.

11. Method for manufacturing sheets with high transmission characteristics in the visible region of the spectrum and with high reflection characteristics for thermal radiation by the coating of transparent substrates by cathode sputtering, <u>characterised in that</u>

a) the <u>first layer</u> from a material of the oxide group ZnO, $SnO_2$, $In_2O_3$, $Bi_2O_3$, $TiO_2$, $ZrO_2$, $Ta_2O_5$, $SiO_2$, $Al_3O_3$ or their mixtures or from one of the nitrides AlN, $Si_3N_4$ or their mixtures or from aluminium, titanium, zirconium or silicon oxinitride or their mixtures with a thickness of 20 nm to 70 nm is applied ,

b) the <u>second layer,</u> which is present as a metal suboxide (sub-stoichiometric oxide) from one of the metals Zn and/or Ta or their mixtures with a thickness of 1 nm to 40 nm, is deposited,

c) the <u>third layer</u> is manufactured from one of the metals Ag, Cu or their mixtures with a thickness of 5 to 30 nm,

d) the <u>fourth layer</u> is manufactured as a metal layer or metal suboxide (substoichiometric oxide) from one of the metals Ti, Cr, Nb or their mixture or an alloy with at least 15 at.% of one of the metals with the thickness of 0.5 to 5 nm, preferably 2 nm,

e) the fifth layer, of a material as in the first layer, is applied.

**12.** Method according to claim 11, characterised in that the oxide layers are applied in reactive atmosphere of neutral gas, preferably argon (Ar), and oxygen ($O_2$), that the nitride layers are applied in reactive atmosphere of neutral gas, preferably argon (Ar), and nitrogen ($N_2$), that the oxinitride layers are applied in reactive atmosphere of neutral gas containing argon (Ar), oxygen ($O_2$) and nitrogen ($N_2$), that the metal layers are applied in a neutral atmosphere, preferably argon.

**13.** Method for manufacturing sheets with high transmission characteristics in the visible region of the spectrum and with high reflection characteristics for thermal radiation by the coating of transparent substrates by cathode sputtering, characterised in that

a) the first layer is manufactured from a material of the oxide group $SnO_2$, $Bi_2O_3$ and $In_2O_3$ or their mixed oxides with a content of Mg or Al or P or Ti or Y or Zr or Ta oxide of 0 to 20 at.% or of one of the oxides of the elements with the atomic number 57 to 71 of the Periodic Table from a range of 0 to 5 at%,

b) the second layer is deposited as a metal suboxide (sub-stoichiometric oxide) from one of the metals Zn and/or Ta or their mixtures with a thickness of 1 nm to 40 nm,

c) the third layer is manufactured from one of the metals Ag, Cu or their mixtures with a thickness of 5 to 30 nm,

d) the fourth layer is manufactured as a metal layer or metal suboxide (substoichiometric oxide) from one of the metals Ti, Cr, Nb or their mixture or an alloy with at least 15 at.% of one of the metals with the thickness of 0.5 to 5 nm, preferably 2 nm,

e) the fifth layer, of a material as in the first layer, is applied.

**14.** Method according to claim 13, characterised in that the layers are sputtered by the metal target.

**15.** Method according to claim 13, characterised in that the oxide layers from the group $SnO_2$, $Bi_2O_3$ and $In_2O_3$ or their mixed oxides are sputtered out of a target of metal or metal alloy of the base elements.

**16.** Method according to claim 13, characterised in that the first layer or the fifth layer or the first and the fifth layer is deposited as a double layer of two different materials like the first layer in claim 1, with a total thickness of 20 nm to 70 nm.

**17.** Method according to claim 13, characterised in that between the first and the second layers an additional layer of the same materials as layer 4 in claim 1 is applied.

## Revendications

**1.** Plaque en matériau transparent comprenant un substrat, et un système de couches réalisé sur un côté du substrat, caractérisée en ce que sur le substrat sont appliquées :

a) une première couche parmi le groupe des oxydes ZnO, $SnO_2$, $In_2O_3$, $Bi_2O_3$, $TiO_2$, $ZrO_2$, $Ta_2O_5$, $SiO_2$, $Al_3O_3$, ou leurs mélanges, ou parmi l'un des nitrures AlN, $Si_3N_4$, ou leurs mélanges, ou parmi l'un des nitrures-oxydes d'aluminium, de titane, de zirconium ou de silicium, ou leurs mélanges, sous une épaisseur de 20 nm à 70 nm,
b) une deuxième couche, déposée sous forme de sub-oxyde métallique (oxyde sous-stoechiométrique) de l'un des métaux Zn et/ou Ta, ou de leurs mélanges, sous une épaisseur de 1 nm à 40 nm,
c) une troisième couche de l'un des métaux Ag, Cu, ou de leurs mélanges, sous une épaisseur de 5 à 30 nm,
d) une quatrième couche, déposée sous la forme d'une couche métallique ou d'un sub-oxyde de métal (oxyde sous-stoechiométrique) de l'un des métaux Ti, Cr, Nb, ou de leurs mélanges, ou d'un alliage avec au moins 15 % de l'un des métaux, sous une épaisseur de 0,5 à 5 nm, de préférence 2 nm, et
e) une cinquième couche d'un matériau comme ceux de la première couche.

**2.** Plaque en matériau transparent, comprenant un substrat est un système de couches réalisé sur l'un des côtés du substrat, caractérisée en ce que sur le substrat sont appliquées :

a) une première couche parmi l'un des oxydes $SnO_2$, $In_2O_3$, $TiO_2$, ou $Bi_2O_3$, ou bien de leurs oxydes mixtes avec une teneur d'oxyde de Mg-, ou bien Al-, ou bien P-, ou bien Ti-, ou bien Y-, ou bien Zr-, ou bien Ta- allant de 0 à 20 %, ou parmi l'un des oxydes des éléments possédant les numéros d'ordre 57 à 71 de la table périodique, dans une plage de 0 à 5 %,

b) une deuxième couche, déposée sous la forme de sub-oxyde de métal (oxyde sous-stoechiométrique) de l'un des métaux Zn et/ou Ta, ou de leurs mélanges, sous une épaisseur de 1 nm à 40 nm,

c) une troisième couche de l'un des métaux Ag, Cu, ou de leurs mélanges, sous une épaisseur de 5 à 30 nm,

d) une quatrième couche, déposée sous forme de couche de métal ou bien d'une couche de sub-oxyde de métal (oxyde sous-stoechiométrique) de l'un des métaux Ti, Cr, Nb, ou de leurs mélanges, ou encore d'un alliage avec au moins 15 % de l'un des métaux, sous une épaisseur de 0,5 à 5 nm, de préférence 2 nm,

e) une cinquième couche de l'un des matériaux tels que ceux de la première couche, ou bien parmi le groupe des oxydes ZnO, $SnO_2$, $In_2O_3$, $Bi_2O_3$, $TiO_2$, $ZrO_2$, $Ta_2O_5$, $SiO_2$, $Al_3O_3$, ou leurs mélanges, ou parmi l'un des nitrures AlN, $Si_3N_4$, ou leurs mélanges, ou parmi l'un des nitrures-oxydes d'aluminium, de titane, de zirconium ou de silicium, ou leurs mélanges, sous une épaisseur de 20 nm à 70 nm.

**3.** Plaque selon la revendication 1, caractérisée en ce que la deuxième couche présente une épaisseur d'environ 5 nm.

**4.** Plaque selon la revendication 1, caractérisée en ce qu'une couche additionnelle parmi les matériaux tels que ceux de la deuxième couche dans la revendication 1, est appliquée entre la troisième et la quatrième couche.

**5.** Plaque selon l'une ou plusieurs des revendications précédentes, caractérisée en ce que plusieurs piles de couches sont réalisées les unes à côté des autres sur l'une des surfaces de la plaque.

**6.** Plaque selon la revendication 1, caractérisée en ce que l'on utilise comme substrat une plaque de verre inorganique transparente.

**7.** Plaque selon la revendication 1, caractérisée en ce que l'on utilise comme substrat une plaque de verre organique transparente.

**8.** Plaque selon la revendication 1, caractérisée en ce que l'on utilise comme substrat une feuille organique transparente.

**9.** Plaque selon la revendication 1, caractérisée en ce que la première couche, ou bien la cinquième couche, ou bien la première et la cinquième couche, est déposée sous forme de couche double en deux matériaux différents tels que ceux de la première couche dans la revendication 1, avec une épaisseur totale de 20 nm à 70 nm.

**10.** Plaque selon la revendication 1, caractérisée en ce qu'entre la première et la deuxième couche est appliquée une couche additionnelle parmi les matériaux tels que ceux de la quatrième couche dans la revendication 1.

**11.** Procédé pour réaliser des plaques avec un rapport de transmission élevé dans la plage du spectre visible et avec un rapport de réflexion élevé pour le rayonnement thermique, par revêtement de substrats transparents au moyen de pulvérisation cathodique, caractérisé en ce que :

a) la première couche, en matériau parmi le groupe des oxydes ZnO, $SnO_2$, $In_2O_3$, $Bi_2O_3$, $TiO_2$, $ZrO_2$, $Ta_2O_5$, $SiO_2$, $Al_3O_3$, ou leurs mélanges, ou parmi l'un des nitrures AlN, $Si_3N_4$, ou leurs mélanges, ou parmi l'un des nitrures-oxydes d'aluminium, de titane, de zirconium ou de silicium, ou leurs mélanges, est appliquée sous une épaisseur de 20 nm à 70 nm,

b) la deuxième couche est déposée sous forme de sub-oxyde métallique (oxyde sous-stoechiométrique) de l'un des métaux Zn et/ou Ta, ou de leurs mélanges, sous une épaisseur de 1 nm à 40 nm,

c) la troisième couche est réalisée avec l'un des métaux Ag, Cu, ou de leurs mélanges, sous une épaisseur de 5 à 30 nm,

d) la quatrième couche est réalisée sous la forme d'une couche métallique ou d'un sub-oxyde de métal (oxyde sous-stoechiométrique) de l'un des métaux Ti, Cr, Nb, ou de leurs mélanges, ou d'un alliage avec au moins 15 % de l'un des métaux, sous une épaisseur de 0,5 à 5 nm, de préférence 2 nm, et

e) la cinquième couche est appliquée, en un matériau comme ceux de la première couche.

**12.** Procédé selon la revendication 11, caractérisé en ce que les couches d'oxydes sont appliquées dans une atmosphère réactive de gaz neutre, de préférence de l'argon (Ar), et d'oxygène ($O_2$), en ce que les couches de nitrures sont appliquées dans une atmosphère réactive de gaz neutre, de préférence de l'argon (Ar), et d'azote ($N_2$), en ce que les couches de nitrures-oxydes sont appliquées dans une atmosphère réactive de gaz neutre avec de l'argon (Ar), de l'oxygène ($O_2$) et de l'azote ($N_2$), et en ce que les couches métalliques sont appliquées dans une atmosphère neutre, de préférence de l'argon.

**13.** Procédé pour réaliser des plaques avec un rapport de transmission élevé dans la plage du spectre visible, et avec un rapport de réflexion élevé pour le rayonnement thermique, par revêtement de substrats transparents par pulvérisation cathodique, caractérisé en ce que :

a) la première couche est réalisée en un matériau parmi l'un des oxydes $SnO_2$, $In_2O_3$, ou $Bi_2O_3$, ou bien de leurs oxydes mixtes avec une teneur d'oxyde de Mg-, ou bien Al-, ou bien P-, ou bien Ti-, ou bien Y-, ou bien Zr-, ou bien Ta- allant de 0 à 20 %, ou parmi l'un des oxydes des éléments possédant les numéros d'ordre 57 à 71 de la table périodique, dans une plage de 0 à 5 %,
b) la deuxième couche est déposée sous la forme de sub-oxyde de métal (oxyde sous-stoechiométrique) de l'un des métaux Zn et/ou Ta, ou de leurs mélanges, sous une épaisseur de 1 nm à 40 nm,
c) la troisième couche est réalisée avec l'un des métaux Ag, Cu, ou de leurs mélanges, sous une épaisseur de 5 à 30 nm,
d) la quatrième couche est déposée sous forme de couche de métal ou bien d'une couche de sub-oxyde de métal (oxyde sous-stoechiométrique) de l'un des métaux Ti, Cr, Nb, ou de leurs mélanges, ou encore d'un alliage avec au moins 15 % de l'un des métaux, sous une épaisseur de 0,5 à 5 nm, de préférence 2 nm,
e) la cinquième couche est réalisée avec l'un des matériaux tels que ceux de la première couche.

**14.** Procédé selon la revendication 13, caractérisé en ce que les couches sont pulvérisées à partir de cibles métalliques.

**15.** Procédé selon la revendication 13, caractérisé en ce que les couches d'oxydes du groupe comprenant $SnO_2$, $Bi_2O_3$ et $Sn_2O_3$, ou leurs oxydes mixtes, sont pulvérisés depuis une cible de métal, ou bien d'alliages métalliques des éléments de base.

**16.** Procédé selon la revendication 13, caractérisé en ce que la première couche, ou bien la cinquième couche, ou bien la première et la cinquième couche, est déposée sous forme de couche double en deux matériaux différents tels que ceux de la première couche dans la revendication 1, avec une épaisseur totale de 20 nm à 70 nm.

**17.** Procédé selon la revendication 13, caractérisé en ce qu'entre la première et la deuxième couche est appliquée une couche additionnelle parmi les matériaux tels que ceux de la quatrième couche dans la revendication 1.

FIG.1

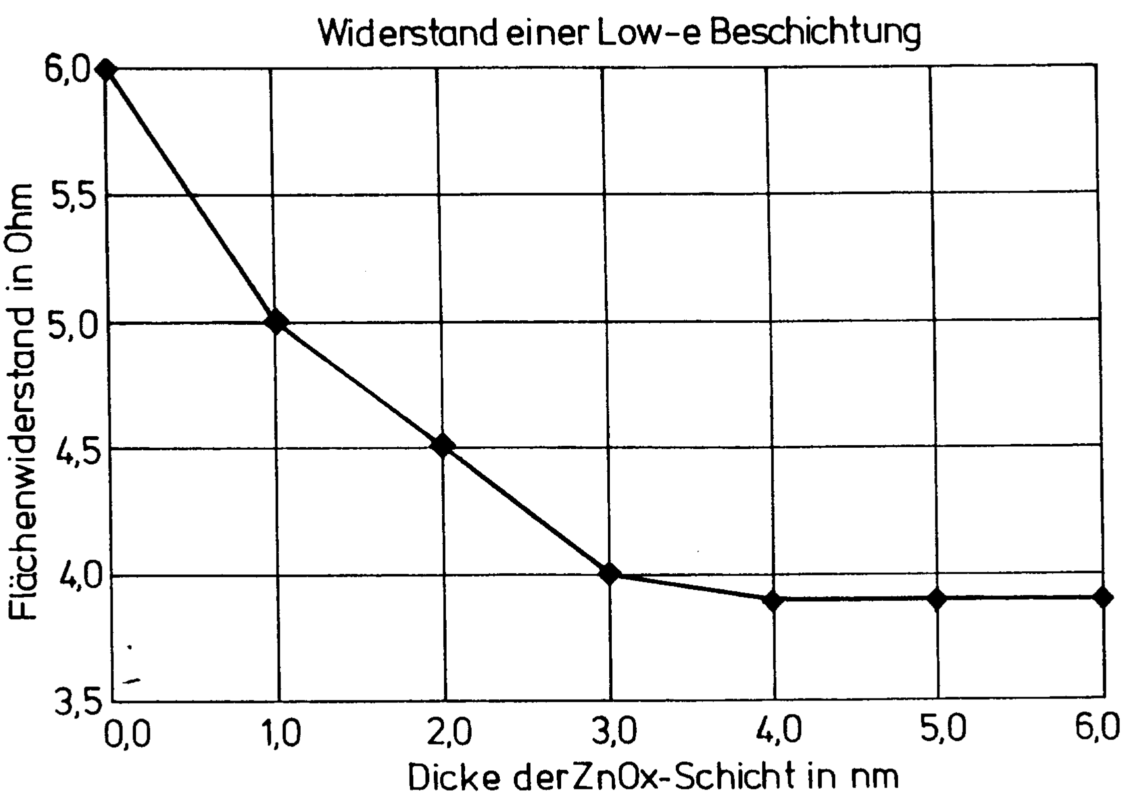
Widerstand einer Low-e Beschichtung
6,0
5,5
5,0
4,5
4,0
3,5
Flächenwiderstand in Ohm
0,0
1,0
2,0
3,0
4,0
5,0
6,0
Dicke der ZnOx-Schicht in nm

# FIG.2

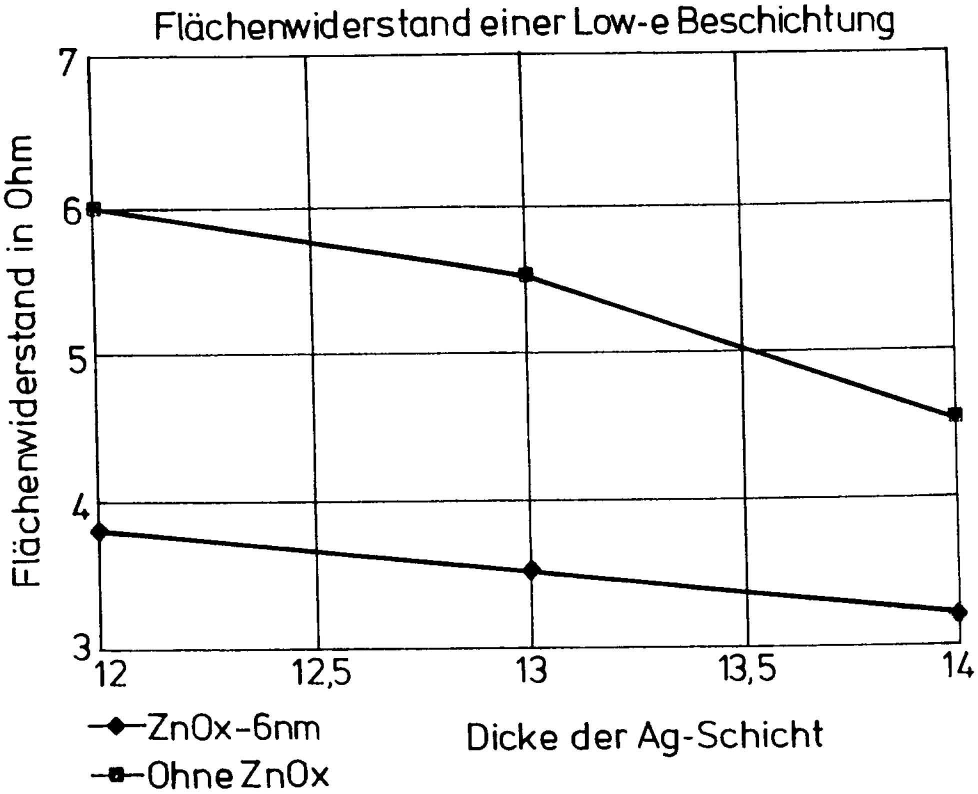
Flächenwiderstand einer Low-e Beschichtung
Flächenwiderstand in Ohm
7
6
5
4
3
12
12,5
13
13,5
14
ZnOx-6nm
Ohne ZnOx
Dicke der Ag-Schicht

# FIG.3

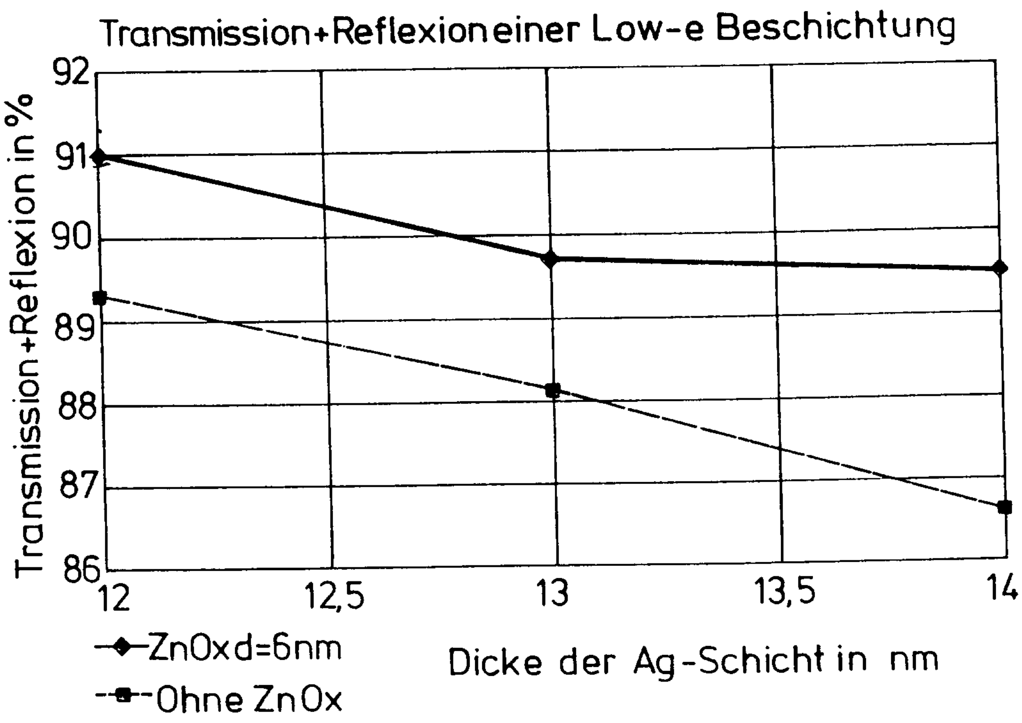
Transmission+Reflexion einer Low-e Beschichtung
Transmission+Reflexion in %
92
91
90
89
88
87
86
12
12,5
13
13,5
14
ZnOx d=6nm
Ohne ZnOx
Dicke der Ag-Schicht in nm